# FASCICULE DE BREVET EUROPEEN

(11) **EP 0 860 732 B1**
(45) Date de publication et mention de la délivrance du brevet: **02.05.2003**
(21) Numéro de dépôt: 97102664.6
(22) Date de dépôt: 19.02.1997
(51) Int. Cl.: G02F 1/1333

(54) **Procédé de fabrication de cellules électro-optiques, notamment à cristaux liquides, ou de cellules photovoltaiques électrochimiques**
Verfahren zur Herstellung elektrooptischer Zellen, insbesondere mit Flüssigkristallen, oder photovoltaischer elektrochemischer Zellen
Manufacturing process of electrooptic cells, in particular comprising liquid crystals, or photovoltaic electrochemical cells

(43) Date de publication de la demande: 26.08.1998
(73) Titulaire: ASULAB S.A., 2074 Marin (CH)
(72) Inventeur: Grupp, Joachim, 2003 Neuchâtel (CH); Poli, Jean-Charles, 22206 Les Geneveys-sur-Coffrane (CH); Terés, Yvan, 2088 Cressier (CH); Kopsits, Norbert, 2000 Neuchâtel (CH)
(74) Mandataire: Ravenel, Thierry Gérard Louis

(56) Documents cités:
- JP-A- 6 305 759
- US-A- 4 094 058
- US-A- 4 617 420
- US-A- 4 707 952
- US-A- 4 773 944
- PATENT ABSTRACTS OF JAPAN vol. 006, no. 222 (E-140), 6 Novembre 1982 & JP 57 126139 A (SHIN NIPPON DENKI KK), 5 Août 1982,

## Description

La présente invention concerne un procédé de fabrication d'une pluralité de cellules électro-optiques, notamment à cristaux liquides, ou de cellules photovoltaïques électrochimiques, chaque cellule comportant une cavité remplie d'un liquide et définie par des cloisons étanches entre deux plaques pourvues d'électrodes à l'intérieur de la cavité, le procédé comportant les étapes suivantes :
(I) fabrication collective d'un lot de cellules remplies dudit liquide et scellées, le lot comportant deux plaques communes à toutes les cellules et un réseau de matière de scellement liant lesdites plaques et formant les cloisons des cellules, et
(II) division du lot en cellules individuelles et, le cas échéant, façonnage d'un contour de chaque cellule.

Dans le procédé le plus couramment utilisé pour fabriquer un lot de telles cellules, on prépare deux grandes plaques de verre ou de matière synthétique, au moins l'une de ces plaques étant transparente, on réalise sur celles-ci des électrodes et des pistes conductrices, on dépose sur l'une d'elles la matière de scellement en ménageant une ouverture de remplissage pour chaque cellule et l'on assemble les deux plaques pour former un ensemble comprenant plusieurs rangées de cellules ouvertes. On divise alors cet ensemble en bandes rectilignes par des techniques de rayage et cassure du verre (voir par exemple US-A-4 224 093) ou par sciage suivant des droites parallèles. Chaque cellule ayant une ouverture de remplissage le long d'un bord de la bande, on remplit alors les cellules et l'on scelle leurs ouvertures, puis on divise la bande en cellules individuelles rectangulaires suivant des droites perpendiculaires aux précédentes. A ce stade, si le contour des cellules doit présenter des parties s'écartant de la forme rectangulaire, on façonne ces parties par meulage. Les éventuelles couches extérieures telles qu'un polariseur, un réflecteur ou un "transflecteur", qui sont nécessaires notamment sur les cellules d'affichage à cristaux liquides (LCD), sont appliquées ultérieurement, car elles seraient détériorées par les opérations de coupe et de meulage. Ces étapes de fabrication à effectuer individuellement sur chaque cellule rendent la fabrication plus complexe et plus coûteuse que si elle pouvait être faite sur un lot de cellules.

La fabrication se complique encore si chaque cellule doit comporter en outre un trou central, par exemple pour le passage des arbres des aiguilles d'une montre si la cellule est au centre du cadran ou constitue celui-ci. Il a été proposé de percer un tel trou à travers une cellule LCD terminée à l'aide d'un jet de sable ayant la forme du trou, mais cette technique ne donne pas une découpe précise et endommage la surface supérieure de la cellule, notamment la ou les couches extérieures qui pourraient avoir été appliquées au préalable.

Dans le brevet US 4 094 058 qui forme le préambule de la revendication 1, il est décrit divers perfectionnements du procédé classique de fabrication d'un lot de cellules LCD, afin d'effectuer le plus possible de travail sur le lot avant sa division en cellules. L'une des variantes décrites comporte les deux étapes définies plus haut. Pour obtenir un lot de cellules remplies et scellées dans la première étape, on applique sur l'une des plaques transparentes la matière de scellement formant le réseau des cloisons, puis le cristal liquide, puis la seconde plaque par-dessus et l'on effectue le scellement. Toutefois il est douteux que ce scellement puisse être de bonne qualité, étant donné que le liquide a mouillé des surfaces à lier entre elles. D'autre part, les méthodes de découpage préconisées dans ce document exigent une certaine distance entre les cloisons de deux cellules adjacentes, ce qui perd beaucoup de place, et ne permettent de produire que des cellules rectangulaires.

La présente invention a pour but de perfectionner le procédé classique de fabrication collective en lot, de façon à permettre de réaliser le plus possible d'opérations sur le lot avant de diviser celui-ci en cellules individuelles.

Un but particulier consiste à réaliser l'étape II par des techniques simples et efficaces, si possible en une seule étape, également pour produire des cellules non rectangulaires en évitant les opérations de meulage.

Selon l'invention, ce but est atteint par un procédé du genre indiqué en préambule de la revendication 1 , caractérisé en ce que l'étape II est réalisée au moins partiellement par découpage au moyen d'un jet d'eau employé pour individualiser les cellules, l'eau étant chargée ou non d'un abrasif.

Bien que la technique de découpage d'une plaque de verre au jet d'eau à très haute pression soit déjà connue et appliquée, l'idée de l'appliquer au découpage d'un lot de cellules remplies de liquide dans la présente invention ouvre des perspectives nouvelles et avantageuses pour les fabrications concernées. En effet, comme le jet d'eau est très fin et n'altère pas les parties voisines de la partie coupée, les cellules peuvent être pratiquement terminées en lot avant le découpage. On peut notamment effectuer le remplissage et le scellement par des méthodes sûres et appliquer toutes les couches extérieures nécessaires sur le lot entier, donc d'une façon plus simple et plus économique que sur des cellules individuelles. De plus, le découpage n'a pas besoin de se faire en ligne droite, mais peut suivre directement le contour final de chaque cellule, évitant ainsi tout façonnage ultérieur tel que le meulage. Le contour peut présenter des formes quelconques, même concaves, ce qui est très difficile à réaliser avec les techniques classiques. Les plaques servant de substrat peuvent être en verre, mais aussi en d'autres matières, en particulier synthétiques. La finesse du découpage au jet d'eau permet de simplifier le réseau de matière de scellement, notamment en réalisant des cloisons communes à deux cellules adjacentes, ces cloisons pouvant être découpées longitudinalement au jet d'eau au cours de l'étape II. Si les cellules comportent des trous traversants, ceux-ci peuvent être réalisés aussi par découpage au jet d'eau au cours de la même étape, par exemple sur le lot avant que la cellule correspondante en soit détachée.

Dans une forme de réalisation avantageuse du procédé, au moins une couche extérieure, notamment une couche polarisante, une couche antireflet, une couche réfléchissante et/ou une couche protectrice, est appliquée sur au moins une face extérieure du lot de cellules avant l'étape II et est découpée avec les plaques au cours de l'étape II. On peut également prévoir que le lot de cellules soit collé sur une plaque de support qui sera découpée en même temps que les cellules.

Comme dans le procédé classique décrit plus haut, le lot de cellules peut être une bande rectiligne obtenue par division d'un ensemble plus grand de cellules en plusieurs bandes comprenant chacune une ou deux rangées de cellules, de sorte que chaque cellule comporte au moins un bord rectiligne formé par un bord de la bande et comportant des éléments conducteurs extérieurs connectés aux électrodes. De préférence, la division en bandes est faite avant le remplissage des cellules. La ou les couches extérieures peuvent être appliquées après la division en bandes, si elles ne doivent pas recouvrir les éléments conducteurs extérieurs ménagés sur les bords rectilignes.

D'autres caractéristiques et avantages de la présente invention apparaîtront dans la description suivante d'un mode de réalisation préféré, présenté à titre d'exemple non limitatif en référence aux dessins annexés, dans lesquels :
- la figure 1 est une vue schématique partielle en plan d'un lot de cellules d'affichage à cristaux liquides (LCD) en cours de fabrication selon la présente invention,
- la figure 2 est une vue en plan d'une cellule détachée du lot de la figure 1,
- la figure 3 est une vue schématique en coupe transversale suivant la ligne III-III de la figure 2, montrant notamment le perçage d'un trou central dans la cellule,
- la figure 4 représente schématiquement en plan une méthode de perçage du trou central, et
- la figure 5 est une vue analogue à la figure 1, pour un autre type de cellules.

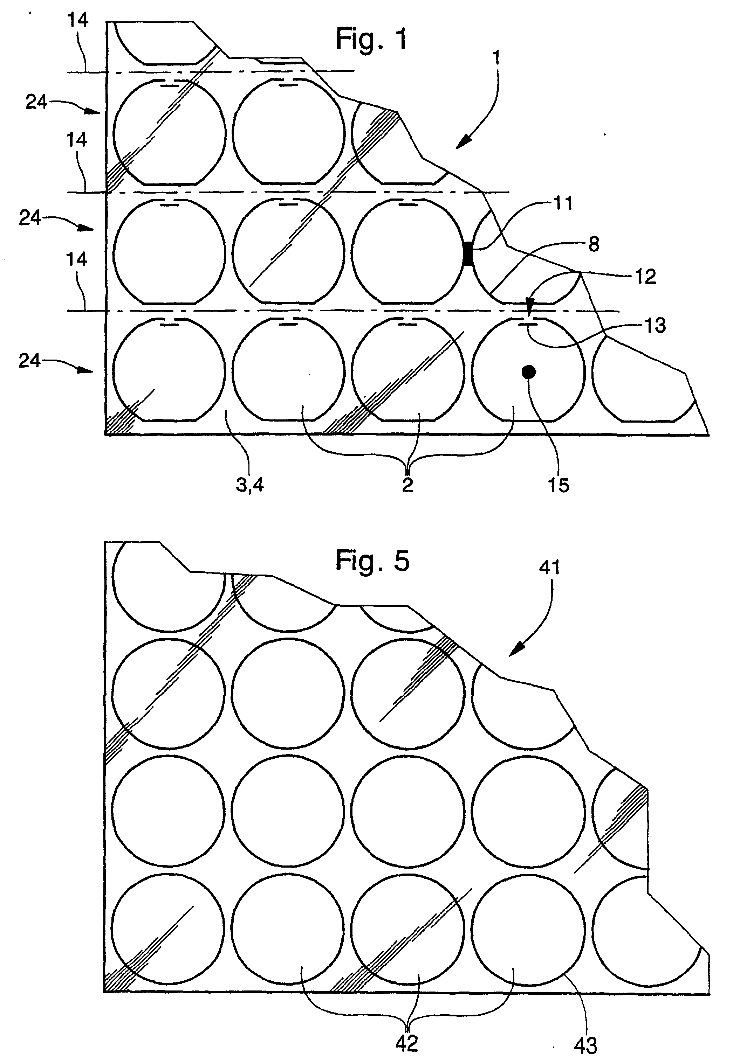

La figure 1 montre un ensemble 1 de cellules LCD 2 en cours de fabrication, toutes ces cellules étant définies entre deux plaques superposées 3 et 4 généralement transparentes, par exemple des plaques de verre.

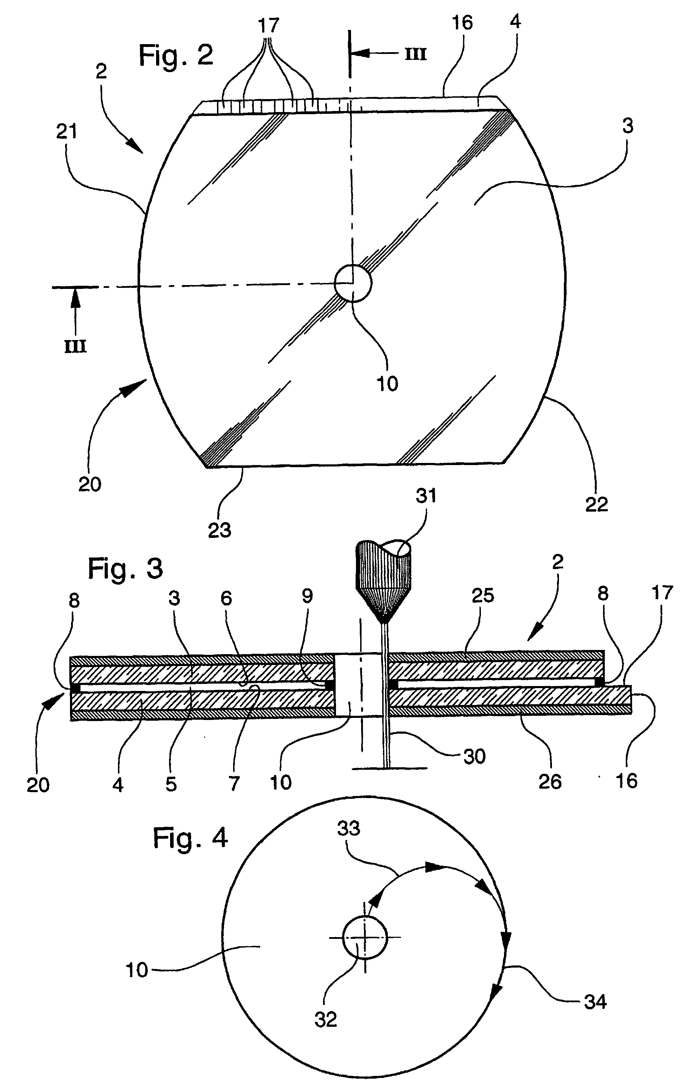

En se référant aussi aux figures 2 et 3, qui montrent une structure connue, on voit que chaque cellule 2 comporte une cavité 5 destinée à contenir les cristaux liquides, cette cavité étant définie par les plaques de verre 3 et 4, revêtues d'électrodes transparentes respectives 6 et 7, et par des cloisons étanches 8 et 9 faites d'une matière de scellement qui fixe les plaques 3 et 4 l'une à l'autre. Dans l'exemple illustré par les figures 2 et 3, la cellule comporte en outre un trou central 10, par exemple pour le passage des axes des aiguilles d'une montre, la cellule étant destinée à prendre place sur le cadran de la montre. La cloison 9 suit le pourtour du trou 10, tandis que la cloison 8 suit le contour extérieur de la cellule 2.

Dans l'ensemble représenté à la figure 1, les cloisons périphériques 8 des cellules sont formées par un réseau de matière de scellement qui peut, par exemple, comporter des parties de cloisons 11 communes à deux cellules adjacentes. Une seule de ces cloisons communes 11 est représentée pour simplifier le dessin, mais la même disposition peut être adoptée dans tout l'ensemble afin de simplifier la configuration du réseau. On voit également qu'une ouverture de remplissage 12 est ménagée dans la paroi périphérique 8 de chaque cellule 2 en regard d'une petite paroi 13 servant à bloquer le bouchon de colle utilisé pour sceller l'ouverture 12 après remplissage des cellules. De manière connue, les ouvertures 12 sont alignées le long de lignes de partage rectilignes et parallèles 14 représentées en traits mixtes. Les cloisons intérieures 9 ne sont pas représentées dans la figure 1. A ce stade, la zone du futur trou 10 de chaque cellule est occupée de préférence par une pastille circulaire 15 de matière de scellement. Une seule de ces pastilles est représentée pour simplifier le dessin. Cette pastille a un plus grand diamètre que le trou et elle sera découpée en même temps que le verre lors de l'exécution du trou.

Dans les figures 2 et 3, on voit également que chaque cellule 2 comporte un bord rectiligne 16 où la plaque inférieure 4 fait saillie latéralement par rapport à la plaque supérieure 3 pour laisser apparaître près du bord une série de pistes conductrices 17 (dont quelques-unes sont dessinées dans la figure 2) servant de connexions extérieures pour les électrodes 6 et 7. Le reste du contour extérieur 20 de la cellule 2 est commun aux deux plaques de verre 3 et 4 et comprend deux parties courbes 21 et 22 et une partie rectiligne 23.

La fabrication des cellules LCD 2 s'effectue de préférence de la manière suivante. L'ensemble 1 de cellules vides est réalisé de la manière classique, c'est-à-dire que les deux plaques de verre 3 et 4 sont revêtues d'un réseau d'électrodes et de pistes conductrices par une technique connue, puis la matière de scellement est appliquée sur l'une d'elles de façon à former un réseau comprenant les éléments 8, 11, 13 et 15 décrits plus haut, et enfin la seconde plaque est appliquée après un alignement préalable sur ce réseau pour être liée à l'autre par la matière de scellement. On divise ensuite l'ensemble 1 en plusieurs lots 24 en forme de bandes rectilignes, en le coupant suivant les lignes parallèles 14 par une technique appropriée pour former le bord rectiligne 16 de chaque cellule, présentant les connexions extérieures 17. Un procédé de ce genre, dans lequel on trace une ligne de rupture sur chaque plaque de verre au moyen d'un outil au diamant, les deux lignes étant décalées, puis on casse le verre suivant ces lignes, est décrit par exemple dans le brevet US 4 224 093. On notera que chaque lot 24 peut contenir deux rangées de cellules 2, si les ouvertures de remplissage 12 des cellules de la seconde rangée sont dirigées du côté opposé à celles de la première rangée.

Ensuite, chaque lot 24 est traité séparément pour effectuer, par une technique connue, le remplissage des cellules 2 par du cristal liquide, puis le scellement des ouvertures de remplissage 12. On peut alors appliquer sur chaque lot 24 toutes les couches extérieures nécessaires, de préférence sous la forme de bandes couvrant sensiblement toute la longueur du lot 24. Comme le montre la figure 3, on peut réaliser ainsi des couches supérieures 25 comprenant par exemple un film polarisant et un vernis protecteur, et des couches inférieures 26 comprenant par exemple un film polarisant et réfléchissant et une feuille de protection ou de renforcement.

La dernière étape du procédé consiste à découper les parties 21, 22 et 23 du contour de chaque cellule 2, ce qui la détachera du lot 24, et découper également le trou central 10. Ceci s'effectue de préférence en une seule étape de travail au moyen d'une machine de découpage à jet d'eau à très haute pression, de préférence à commande automatique. De préférence le jet d'eau 30 (figure 3) et la buse 31 qui le produit sont stationnaires, tandis que la machine déplace le lot 24 dans un plan de façon que le jet suive la trajectoire à découper sur le lot. Toutefois des techniques employant un jet mobile sont aussi utilisables.

Dans le cadre de la présente invention, on entend englober aussi le cas où le découpage au jet d'eau se fait sur un lot partiel ne comprenant qu'une seule cellule. C'est le cas si, dans l'exemple décrit ci-dessus, on partage chaque bande 24 suivant des lignes transversales, perpendiculaires aux lignes 14, par n'importe quelle technique connue pour séparer les cellules 2 avant de découper leur contour 20 au jet d'eau.

Chaque trou 10 d'une cellule 2 sera découpé de préférence avant le contour 20, pendant que la cellule est encore solidaire du lot. La figure 4 montre à une échelle agrandie une méthode avantageuse pour découper le trou 10, grâce au fait que le jet 30 a un diamètre nettement plus petit que celui du trou 10. On place tout d'abord le lot dans une position telle que le jet se trouve dans une région intérieure du trou 10, par exemple au centre du trou, pour y percer un premier petit trou 32 qui traversera toute la cellule, ce trou pouvant avoir un diamètre irrégulier étant donné qu'il est borgne initialement. On déplace ensuite le lot 24 de façon que le jet suive une trajectoire quelconque 33 pour rejoindre le pourtour circulaire ou autre 34 du trou 10, puis le déplacement se poursuit le long de ce pourtour 34 pour le découper suivant la forme précise désirée.

Comme le montre la figure 3, le découpage au jet d'eau du contour extérieur 20 de la cellule 2 coupe en même temps les deux plaques de verre 3 et 4, les couches extérieures 25 et 26 et, le cas échéant, la matière de scellement formant la cloison 8 là où il est prévu une cloison commune telle que 11 (figure 1). Cette technique donne une coupe nette et propre et ne cause pas de détérioration mécanique ou chimique des couches extérieures 25 et 26 au voisinage du trait de coupe.

La figure 5 illustre l'application d'une technique analogue pour fabriquer un ensemble 41 de cellules photovoltaïques électrochimiques 42 remplies d'un liquide et ayant par exemple une forme circulaire. Des cellules de ce genre sont décrites par exemple dans les publications WO 91/16719 et WO 95/18456. Comme elles n'ont besoin que de deux bornes de connexion extérieures, celles-ci peuvent être réalisées soit à travers des trous ménagés dans les plaques de verre, soit par des couches conductrices s'étendant des électrodes jusqu'au bord de la cellule. Par conséquent, il est possible de fabriquer entièrement le lot 41 de cellules 42 remplies par des méthodes connues, puis de découper la totalité du contour extérieur 43 de chaque cellule 42 par la technique du jet d'eau à très haute pression, en détachant ainsi chaque cellule du reste du lot. Une telle cellule peut aussi comporter un trou analogue au trou 10 décrit plus haut, par exemple si la cellule doit occuper la place du cadran d'une montre.

## Revendications

1. Procédé de fabrication d'une pluralité de cellules électro-optiques (2), notamment à cristaux liquides, ou de cellules photovoltaïques électrochimiques (42), chaque cellule (2, 42) comportant une cavité (5) remplie d'un liquide et définie par des cloisons étanches (8, 9) entre deux plaques pourvues d'électrodes à l'intérieur de la cavité, le procédé comportant les étapes suivantes :
(I) fabrication collective d'un lot (24, 41) de cellules remplies dudit liquide et scellées, le lot comportant deux plaques (3, 4) communes à toutes les cellules et un réseau de matière de scellement liant lesdites plaques et formant les cloisons (8, 9) des cellules, et
(II) division du lot en cellules individuelles en découpant en même temps les deux plaques (3, 4) et, le cas échéant, façonnage d'un contour de chaque cellule,
**caractérisé en ce que** l'étape II est réalisée au moins partiellement par découpage du lot au moyen d'un jet d'eau (30) employé pour individualiser les cellules, l'eau étant chargée ou non d'un abrasif.

2. Procédé selon la revendication 1, **caractérisé en ce que** lesdites plaques (3, 4) sont en verre.

3. Procédé selon la revendication 1 ou 2, **caractérisé en ce qu'**au moins une couche extérieure (25, 26), notamment une couche polarisante, une couche antireflet, une couche réfléchissante et/ou une couche protectrice, est appliquée sur au moins une face extérieure du lot de cellules avant l'étape II et est découpée avec les plaques au cours de l'étape II.

4. Procédé selon la revendication 1 ou 2, **caractérisé en ce que**, dans l'étape I, ledit lot (24) de cellules est une bande rectiligne obtenue par division d'un ensemble plus grand (1) de cellules en plusieurs bandes comprenant chacune une ou deux rangées de cellules, de sorte que chaque cellule comporte au moins un bord rectiligne (16) formé par un bord de la bande et comportant des éléments conducteurs extérieurs (17) connectés aux électrodes.

5. Procédé selon la revendication 4, **caractérisé en ce que** la division en bandes est faite avant le remplissage des cellules.

6. Procédé selon les revendications 3 et 5, **caractérisé en ce que** ladite au moins une couche extérieure (25, 26) est appliquée après la division en bandes.

7. Procédé selon la revendication 1 ou 2, **caractérisé en ce que** lesdites cloisons comprennent, dans l'étape I, des cloisons (11) communes à deux cellules adjacentes et **en ce que** les cloisons communes sont découpées longitudinalement au jet d'eau au cours de l'étape II.

8. Procédé selon l'une des revendications précédentes, **caractérisé en ce que** chaque cellule comporte au moins un trou traversant (10) qui est réalisé par découpage au jet d'eau au cours de l'étape II.

9. Procédé selon la revendication 8, **caractérisé en ce que** pour le découpage du trou, on utilise un jet d'eau ayant un diamètre plus petit que celui du trou, tout d'abord pour percer la cellule dans une région intérieure du trou, puis pour découper le pourtour du trou à partir de la région percée.

10. Procédé selon l'une des revendications 1 à 3, **caractérisé en ce que** l'on découpe la totalité du contour (43) de chaque cellule au cours de l'étape II.

## Patentansprüche

1. Verfahren zur Herstellung mehrerer elektrooptischer Zellen (2), insbesondere Flüssigkristallzellen, oder elektrochemischer photovoltaischer Zellen (42), wobei jede Zelle (2, 42) einen mit einer Flüssigkeit gefüllten Hohlraum (5) aufweist, der durch dichte Trennwände (8, 9) zwischen zwei mit Elektroden versehenen Platten in dem Hohlraum definiert ist, wobei das Verfahren die folgenden Schritte umfaßt:
(I) gemeinsames Herstellen eines Loses (24, 41) von Zellen, die mit der Flüssigkeit gefüllt und verkapselt sind, wobei das Los zwei allen Zellen gemeinsame Platten (3, 4) und ein Netz aus Einkapselungsmaterial, das die Platten verbindet und die Trennwände (8, 9) der Zellen bildet, umfaßt, und
(II) Unterteilen des Loses in einzelne Zellen durch gleichzeitiges Schneiden der zwei Platten (3, 4) und gegebenenfalls Formen eines Umrisses jeder Zelle,
**dadurch gekennzeichnet, daß** der Schritt II wenigstens teilweise durch Schneiden eines Loses mittels eines Wasserstrahls (30) ausgeführt wird, der für die Bildung einzelner Zellen verwendet wird, wobei das Wasser ein Strahlmittel aufweist oder nicht.

2. Verfahren nach Anspruch 1, **dadurch gekennzeichnet, daß** die Platten (3, 4) aus Glas sind.

3. Verfahren nach Anspruch 1 oder 2, **dadurch gekennzeichnet, daß** wenigstens eine äußere Schicht (25, 26), insbesondere eine polarisierende Schicht, eine antireflektierende Schicht, eine reflektierende Schicht und/oder eine Schutzschicht, auf wenigstens eine äußere Fläche des Loses von Zellen vor dem Schritt II aufgebracht und zusammen mit den Platten während des Schrittes geschnitten wird.

4. Verfahren nach Anspruch 1 oder 2, **dadurch gekennzeichnet, daß** im Schritt I das Los (24) von Zellen ein geradliniges Band ist, das durch Unterteilen einer größeren Gesamtheit (1) von Zellen in mehrere Bänder erhalten wird, die jeweils eine oder zwei Reihen von Zellen umfassen, derart, daß jede Zelle wenigstens einen geradlinigen Rand (16) aufweist, der durch einen Rand des Bandes gebildet ist und äußere Leiterelemente (17) umfaßt, die mit den Elektroden verbunden sind.

5. Verfahren nach Anspruch 4, **dadurch gekennzeichnet, daß** die Unterteilung in Bänder vor der Befüllung der Zellen erfolgt.

6. Verfahren nach den Ansprüchen 3 und 5, **dadurch gekennzeichnet, daß** die wenigstens eine äußere Schicht (25, 26) nach der Unterteilung in Bänder aufgebracht wird.

7. Verfahren nach Anspruch 1 oder 2, **dadurch gekennzeichnet, daß** die Trennwände im Schritt I zwei benachbarten Zellen gemeinsame Trennwände (11) umfassen und daß die gemeinsamen Trennwände während des Schrittes II mit dem Wasserstrahl longitudinal geschnitten werden.

8. Verfahren nach einem der vorhergehenden Ansprüche, **dadurch gekennzeichnet, daß** jede Zelle wenigstens ein Durchgangsloch (10) aufweist, das während des Schrittes II durch Ausschneiden mit dem Wasserstrahl hergestellt wird.

9. Verfahren nach Anspruch 8, **dadurch gekennzeichnet, daß** zum Ausschneiden des Lochs ein Wasserstrahl mit einem Durchmesser, der kleiner als jener des Lochs ist, verwendet wird, zunächst, um die Zelle in einer inneren Zone des Lochs zu durchlochen und dann, um den Umfang des Lochs ausgehend von der durchlochten Zone auszuschneiden.

10. Verfahren nach einem der Ansprüche 1 bis 3, **dadurch gekennzeichnet, daß** der gesamte Umfang (43) jeder Zelle während des Schrittes II ausgeschnitten wird.

## Claims

1. Method for manufacturing a plurality of electro-optic cells (2), in particular liquid crystal cells, or electrochemical photovoltaic cells (42), each cell (2, 42) including a cavity (5) filled with a liquid and defined by sealed partitions (8, 9) between two plates provided with electrodes within the cavity, the method including the following steps :
(I) collective manufacturing of a batch (24, 41) of cells filled with said liquid and sealed, the batch including two plates (3, 4) common to all the cells and a pattern of sealing material bonding said plates and forming the cell partitions (8, 9), and
(II) dividing the batch into individual cells by cutting in the same time the two plates (3, 4) and, where necessary, shaping a contour for each cell,
**characterized in that** step II is achieved at least partially by cutting the batch by means of a water jet (30) used for individualizing the cells, the water either including or not an abrasive.

2. Method according to claim 1, **characterized in that** said plates (3, 4) are made of glass.

3. Method according to claim 1 or 2, **characterized in that** at least one external layer (25, 26), in particular a polarising layer, an anti-reflective layer and/or a protective layer, is applied on at least one external face of the batch of cells prior to step II and is cut with the plates during step II.

4. Method according to claim 1 or 2, **characterized in that**, in step I, said batch (24') of cells is a rectilinear strip obtained by dividing a larger unit (1) of cells into several strips each including one or two rows of cells, so that each cell includes at least one rectilinear edge (16) formed by an edge of the strip and including external conductive elements (17) connected to the electrodes.

5. Method according to claim 4, **characterized in that** the division into strips is effected prior to filling the cells.

6. Method according to claims 3 and 5,
**characterized in that** said at least one external layer (25, 26) is applied after the division into strips.

7. Method according to claim 1 or 2, **characterized in that** said partitions include, in step I, partitions (11) common to two adjacent cells and **in that** the common partitions are cut longitudinally by the water jet during step II.

8. Method according to one of the preceding claims, **characterized in that** each cell includes at least one through hole (10) which is made via water jet cutting during step II.

9. Method according to claim 8, **characterized in that** a water jet having a smaller diameter than that of the hole is used for cutting the hole, first of all for piercing the cell in an inner area of the hole, then for cutting the contour of the hole from the pierced area.

10. Method according to one of claims 1 to 3, **characterized in that** the whole of the contour (43) of each cell is cut during step II.
